# EUROPÄISCHE PATENTSCHRIFT

(11) **EP 2 876 062 B1**
(45) Veröffentlichungstag und Bekanntmachung des Hinweises auf die Patenterteilung: **18.03.2020**
(21) Anmeldenummer: 14169784.7
(22) Anmeldetag: 26.05.2014
(51) Int. Cl.: B65G 21/22

(54) **Fördereinrichtung für den Einsatz eines Transportorgans**
Conveying device for the use of a transport device
Dispositif de transport pour l'utilisation d'un organe de transport

(30) Priorität: 31.05.2013 CH 10442013
(43) Veröffentlichungstag der Anmeldung: 27.05.2015
(73) Patentinhaber: Müller Martini Holding AG, 6052 Hergiswil (CH)
(72) Erfinder: Landolt, Michael, 6260 Reiden (CH)

(56) Entgegenhaltungen:
- WO-A2-2011/060560
- DE-B- 1 032 166
- JP-A- 2008 265 888

## Beschreibung

### Technisches Gebiet

Die vorliegende Erfindung betrifft eine Fördereinrichtung für den Einsatz eines Transportorgans zum Fördern von Druckprodukten entlang einer Förderstrecke. Die Fördereinrichtung besteht aus über Flansche miteinander verbundenen Führungskanalabschnitten, welche in Förderrichtung tunnelförmig ausgebildet sind und gegenüber dem auf Rollen fahrbaren Transportorgan eine unterseitige durchgehende Öffnung für Mittel aufweisen, welche eine mittelbare und/oder unmittelbare Förderung der Druckprodukte entlang der Fördereinrichtung übernehmen. Im Innenraum der Führungskanalabschnitte und der Flansche sind Führungsschienenelemente angeordnet, welche Laufflächenelemente für das Transportorgan tragen.

### Stand der Technik

Gemäss CH701855 A1 werden die betreffenden Führungsabschnitte im Werk beiderends mit Aussenflanschen versehen. Diese Aussenflansche weisen Zentriermittel auf, um diese passgenau und praktisch toleranzfrei mit dem betreffenden Aussenflansch eines benachbarten Führungsabschnitts oder einer Arbeitsstation zu verbinden. Weiter wird bei der Herstellung im Werk sichergestellt, dass die Enden der Laufflächen der von einem Führungsabschnitt und den beiden Aussenflanschen gebildeten Kanalsektion sich in Bezug auf die Zentrierungen an einer genau vorbestimmten Lage befinden. Auf diese Art und Weise wird sichergestellt, dass bei der Montage vor Ort ein kontinuierlicher, d.h. toleranzarmer, stufenloser und knickfreier Übergang der Laufflächen an der Stossstelle von einer Kanalsektion in die benachbarte mit kleinstmöglichem Montageaufwand gewährleistet ist.

Geschützt wird hierbei eine "Fördereinrichtung mit einem mindestens einen Führungsabschnitt (20) aus einem Profilmaterial aufweisenden Führungskanal (10) und einem im Führungskanal (10) gelagerten, in Förderrichtung (F) angetriebenen Förderorgan (52), dessen Laufräder (54) mit Laufflächen (56) zusammenwirken, dadurch gekennzeichnet, dass am Führungsabschnitt (20) beiderends je ein Aussenflansch (16) fest angeordnet ist, die Aussenflansche (16) Zentriermittel (24) aufweisen und mit einem Aussenflansch (16) eines weiteren Führungsabschnitts (20) oder mit einer Arbeitsstation (18) über die Zentriermittel (24) passgenau verbunden sind sowie die Laufflächen (56) sich bezüglich der zugeordneten Zentriermittel (24) an einer vorbestimmten genauen Lage befinden um an den Stossstellen einen kontinuierlichen Übergang der Laufflächen (56) zu gewährleisten."

So schlägt diese Druckschrift vor, um ebenfalls einen spalt- und stufenfreien, kontinuierlichen Übergang der Laufflächen 56 und Führungsflächen 50 an der Stossstelle von einem Aussenflansch 16 auf den andern bzw. die Arbeitsstation 18 zu gewährleisten, dass die Laufflächen 56 und gegebenenfalls Führungsflächen 50 betreffend die Zentriermittel 24 eine genau definierte vorbestimmte Lage aufweisen. Die Toleranz dieser Lage ist vorzugsweise kleiner oder gleich 0,02 mm, insbesondere ist sie kleiner oder gleich 0,01 mm. Um dies zu erreichen, können beispielsweise die Aussenflansche 16 werkseitig in den betreffenden Bereichen geschliffen werden (Paragraph 0037).

Auch hier kann ein stufenloser, kontinuierlicher Übergang im Bereich der Führungsflächen 50 und Laufflächen 56 vom Führungsabschnitt 20 auf den Aussenflansch 16 durch werkseitiges Schleifen oder eine andere Bearbeitung erzielt werden (Paragraph 0040).

Diese angenommene Passgenauigkeit lässt sich offensichtlich originär nicht in allen Belangen erzielen, denn in der Beschreibung wird ausgeführt, dass bei dieser Ausführungsform werkseitig (Siehe auch Paragraph 0040) nach dem festen Verbinden des Aussenflansches 16 mit dem Führungsabschnitt 20, beispielweise durch Schleifen sichergestellt wird, dass die Führungsflächen 50 und die Laufflächen 56 am Führungsabschnitt 20 bezüglich der Zentriermittel 24 des Aussenflansches 16 eine genau definierte Lage einnehmen. Weiter wird auch die Stossebene 78 vorzugsweise bearbeitet, so dass das Ende 22 des Führungsabschnitts 20 genau in der vom Aussenflansch 16 definierte Stossebene 78 liegt (Paragraph 0042).

Aus WO2011/060560 A2 ist eine Fördereinrichtung nach dem Oberbegriff des Anspruchs 1 bekannt geworden, bei welcher Verbindungselemente vorhanden sind, welche durch einen formschlüssigen Eingriff lagerichtig miteinander verbunden werden können. Dabei kann die Festlegung der Verbindungselemente an den Führungselementen werkseitig erfolgen, so dass die aus Führungs- und Verbindungselement bestehenden Baugruppen unter Rückgriff auf Standardbauelemente, wie etwa geradlinig verlaufende Führungselemente, bogenförmig verlaufende Führungs- und Verbindungselemente vorkonfektioniert werden können. Dabei kann bei der werkseitigen Vorkonfektionierung ein glatter Übergang von Führungselement auf Verbindungselement sichergestellt werden. Am Montageort können die so vorkonfektionierten Baugruppen, auch Kanalsektionen genannt, im Bereich einander zugewandter stirnflächenseitiger, etwa senkrecht zur Förderstrecke verlaufender Kontaktflächen dieser Verbindungselemente formschlüssig miteinander verbunden werden, wobei durch die formschlüssige Verbindung der den entsprechenden Führungselementen abgewandten Kontaktflächen eine Selbstzentrierung der vorkonfektionierten Baugruppen zueinander erfolgt, mit der ein glatter Übergang zwischen den zur Führung der Förderkette dienenden Führungsflächen der einzelnen Baugruppen sichergestellt wird. Dabei wurde im Rahmen dieser Druckschrift im Besonderen erkannt, dass der durch die Bereitstellung von Führungs- und Verbindungselementen verursachte Mehraufwand im Hinblick auf die damit erreichte Montagevereinfachung am Montageort ohne weiteres in Kauf genommen werden kann, weil diese Montagevereinfachung eine deutliche Verkürzung der Schlussmontagezeiten mit sich bringt.

Die formschlüssige Verbindung im Bereich der stirnseitigen Kontaktflächen kann erreicht werden, wenn eine Kontaktfläche mindestens einen Vorsprung und die andere Kontaktfläche mindestens eine den Vorsprung formschlüssig aufnehmende komplementär dazu gebildete Vertiefung und/oder Ausnehmung aufweisen. Die Verbindungselemente weisen dabei üblicherweise eine dem Führungselement zugewandte im wesentlichen ebene Begrenzungsfläche sowie eine etwa parallel zu dieser ebenen Begrenzungsfläche verlaufende Kontaktfläche auf, wobei ein Vorsprung der Kontaktfläche sich längs der Förderstrecke etwa in die der dem Führungselement zugewandten Begrenzungsfläche entgegengesetzte Richtung erstreckt, während sich die Vertiefung in Richtung auf die dem Führungselement zugewandte Begrenzungsfläche erstreckt.

Zusammenfassend lässt sich folgendes sagen: Fördereinrichtungen mit einer mit Hilfe einer geeigneten Führungsanordnung längs einer vorzugsweise endlos umlaufenden Förderstrecke geführten Förderkette werden zum Transport von Druckprodukten zwischen einzelnen Verarbeitungsstationen, wie etwa Einsteckmaschinen, Adressiervorrichtungen, Klebeapparaten, etc., benutzt. Dabei werden die Druckprodukte üblicherweise von an den Kettengliedern montierten Greifern bzw. Klammern gehalten und gegebenenfalls an den Verarbeitungsstationen von den Greifern freigegeben. Zur Gewährleistung eines kontinuierlichen Betriebs wird die Förderkette üblicherweise endlos umlaufend längs der durch die Führungsanordnung festgelegten Förderstrecke angetrieben. Die Förderstrecke weist üblicherweise gerade und bogenförmige Abschnitte oder Kanalsektionen auf, wobei die bogenförmigen Abschnitte innerhalb einer Horizontalebene, einer Vertikalebene oder einer schräg nach oben oder unten verlaufenden Ebene angeordnet sein können. Entsprechend muss auch die Fördereinrichtung geradlinige sowie bogenförmige Führungskanalabschnitte aufweisen, durch welche die Bögen der Förderstrecke bestimmt werden.

Die Förderstrecke kann sich über eine Länge von 100 m oder mehr erstrecken und dabei einen gesamten Produktionsraum in horizontaler und vertikaler Richtung durchlaufen. Daher kann die zur Festlegung der Förderstrecke dienende Fördereieinrichtung nicht einstückig gefertigt werden, sondern sie muss aus einzelnen mit Hilfe von geeigneten Mitteln miteinander verbundenen Führungselementen zusammengesetzt werden. Entsprechende Führungsanordnungen sind bspw. in der WO99/33731, EP1029815 A1, WO99/33722, WO99/33732, WO99/33730 beschrieben.

Bei der Montage der bekannten Führungsanordnungen werden die einzelnen Führungselemente üblicherweise stirnflächenseitig zusammengeführt und mit Hilfe von in die Seitenwände der Führungselemente eingreifenden Klemmeinrichtungen fest miteinander verbunden.

Bei der Montage der einzelnen Führungskanalabschnitte muss darauf geachtet werden, dass die zur Führung der Laufflächenelemente an den Trennebenen der Führungskanalabschnitte und der Flansche bündig und ohne Abstufungen ineinander übergehen, um einen geräusch- und verschleissarmen Betrieb zu gewährleisten. In vielen Fällen werden die Übergänge an den Trennebenen nachbearbeitet, wie etwa durch eine ausgleichende Schleifoperation. Aber auch nach einer solchen zusätzlichen Bearbeitung ist in vielen Fällen zu beobachten, dass sich der Lauf der Förderkette längs der Fördereinrichtung unruhig und lärmig verhält.

### Darstellung der Erfindung

Hier will die Erfindung Abhilfe schaffen. Der Erfindung, wie sie in den Ansprüchen gekennzeichnet ist, liegt die Aufgabe zugrunde, eine Fördereinrichtung vorzuschlagen, welche die Nachteile der zum Stand der Technik gehörenden Anordnungen zu beheben vermag. Es ist darüber hinaus Aufgabe der Erfindung, eine Fördereinrichtung bereitzustellen, welche für den Betrieb der zum Stand der Technik bekannt gewordenen Transportorgane eingesetzt werden kann.

Die erfindungsgemässe Fördereinrichtung ist demnach aufgabengemäss nicht ausschliesslich auf den Betrieb mit einem speziell ausgebildeten Transportorgan beschränkt.

Eine weitere Aufgabe der Erfindung ist es, eine Fördereinrichtung bereit zu stellen, deren Betrieb geräuscharm und verschleissminimiert ausfällt.

Dabei wird eine Fördereinrichtung nach dem Anspruch 1 für den Einsatz eines Transportorgans zum Fördern von Druckprodukten entlang einer Förderrichtung vorgeschlagen, welche aus über Flansche miteinander verbundenen Führungskanalabschnitten besteht. Diese sind in Förderrichtung tunnelförmig ausgebildet und weisen gegenüber dem auf Rollen fahrbaren Transportorgan eine unterseitige durchgehende Öffnung für durchhängende Mittel auf, welche eine mittelbare und/oder unmittelbare Förderung der Druckprodukte entlang der Fördereinrichtung übernehmen. Im Innenraum der Führungskanalabschnitte und der Flansche sind Führungsschienenelemente angeordnet, welche auf das Transportorgan ausgerichtete Laufflächenelemente tragen. Diese Laufflächenelemente sind über die Führungskanalabschnitte und die dazugehörigen Flansche mit mindestens einem Mittel ausgestattet und/oder mit mindestens einer Massnahmen versehen, welche an den Stossstellen der Laufflächenelemente einen kontinuierlichen planaren Übergang der dem Transportorgan dienenden Rolloberfläche sicherstellen.

Erfindungsgemäss besteht die Massnahme darin, dass mindestens bei einem zu dem Führungskanalabschnitt gehörenden Laufflächenelement mit einer Überlänge gegenüber der Länge des betreffenden Führungskanalabschnitts ausgestattet ist, und dass als Mittel mindestens ein Adapterelement als Übergangsstück mindestens im Bereich einer Trennebene zwischen Führungskanalabschnitt und Flansch und/oder zwischen benachbarter Flansche vorgesehen ist.

Die Führungsschienenelemente sind mindestens wandseitig und in Längsrichtung des Führungskanalabschnitts angeordnet, welche Trägerbereiche für die Aufnahme von Laufflächenelementen aufweisen, wobei es hierbei mindestens um eine kraftschlüssige Verbindung geht.

Grundsätzlich ist die Führung des Transportorgans so aufgebaut, dass wandseitig des Führungskanalabschnitts zwei gegenüberliegend beabstandete Trägerbereiche für ein erstes und ein zweites Laufflächenelement angeordnet sind. An der gegenüberliegenden Wand sind ebenfalls zwei angeordnete und beabstandete Trägerbereiche für ein drittes und ein viertes Laufflächenelement vorhanden. Jeweils benachbart zu jedem solchen Trägerbereich sind weitere Trägerbereiche für ein fünftes und ein sechstes, sowie für ein siebentes und ein achtes Laufflächenelement angeordnet, deren Laufflächen jeweils zu einem unmittelbar benachbarten Laufflächenelement rechtwinklig angeordnet sind. Zum besseren Verständnis dieses Aufbaues und des zugrundeliegenden Rollbetriebs wird auf die Druckschrift WO2011/060560 A3 verwiesen, wobei diese Druckschrift einen integrierenden Bestandteil vorliegender Beschreibung bildet.

Indessen, bei diesem Aufbau ist es nicht immer zwingend, dass jede Führungsrolle des Transportorgans beidseitig durch zwei in Förderrichtung parallele verlaufende Führungsschienenelemente geführt werden muss. Wenn also im Uhrzeigersinn acht mögliche, jeweils paarweise verlaufende Führungsschienenelemente vorgesehen sind, so ist es möglich, dass nur das erste, dritte, fünfte, siebente Führungsschienenelement mit einem führungsaktiven Laufflächenelement bestückt ist, dergestalt, dass die Führungsrollen des Transportorgans dann nur über diese vier Laufflächenelemente geführt werden. Zu den unmittelbar gegenüberliegenden Laufflächenelementen weist die Führungsrolle dann ein Spiel auf. Bei dieser Konfiguration wird eine integrative Selbstandruckwirkung der Führungsrollen gegenüber den führungsaktiven Laufflächenelementen erzielt. Hierzu wird auf US2013/0001051 A1, Fig. 14, verwiesen.

Die Länge des zu einem Führungskanalabschnitt gehörenden Laufflächenelemen-tes erstreckt sich über mindestens ein Ende des Laufflächenelementes; das Laufflächenelement weist also gegenüber des Führungskanalabschnitts eine Überlänge auf, welche mindestens teilweise die kontinuierliche Fortsetzung der Lauffläche innerhalb des angeschlossenen Flansches bildet, womit sichergestellt ist, dass im Bereich der Trennebene zwischen Führungskanalabschnitt und Flansch keine Unterbrechung der durch die Laufflächenelemente vorgegebenen Rolloberfläche entsteht. Diese Vorkehrung lässt sich nach Bedarf an beiden Enden des Führungskanalabschnitts vorsehen.

Vorzugsweise wird vorgesehen, dass die genannte Überlänge des Laufflächenelementes gegenüber der Länge des Führungskanalabschnitts mindestens der Strecke entspricht, welche innerhalb des angeschlossenen Flansches durch eine intermediäre Anschlagsstelle gebildet ist. Damit wird erreicht, dass das über die Trennebene zwischen Führungskanalabschnitt und Flansch hinausragende Überlänge des Laufflächenelements nicht die ganze axiale Breite des Flansches erfasst, und durch die Anschlagsstelle eine positionsstabile Lage erfährt.

Die auf die Anschlagsstelle im Flansch gerichtete Überlänge des Laufflächenelementes gegenüber dem Führungskanalabschnitt lässt sich darüber hinaus mit einem Längenübermass versehen, das nach der Montage der Kanalsektion und im Betrieb eine zusätzliche positive stabilisierende Wirkung des Laufflächenelementes gegenüber den Rollen des Transportorgans entfaltet:
Mit einem solchen Längenübermass entsteht im eingebauten Zustand, wenn also die Flansche mit dem jeweiligen als Kanalsektion gebildeten Führungskanalabschnitt kraftschlüssig gekoppelt sind, einen Druck auf das Laufflächenelement in Rollrichtung, der zu einer leichten gleichmässigen Auswölbung innerhalb der jeweiligen Länge des Laufflächenelementes führt, womit dessen Verschleiss oder Lockerung im Betrieb aufgefangen wird resp. entgegengewirkt werden kann. Das heisst, dass die zwischen den Laufflächenelementen geführten Führungsrollen immer über eine satte und auch elastische Führung verfügen, womit sie ohne Vibrationen und geräuscharm abrollen können.

Das Mass dieser Auswölbung stellt sich dann endgültig ein, wenn der ebenfalls mit einer Anschlagsstelle versehene Flansch auf der Gegenseite des Führungskanalabschnitts montiert wird. Bei einer solchen Konfiguration entsteht eine Rolloberfläche des Laufflächenelementes, welche über die volle Länge des Führungskanalabschnitts sowie über die Trennebenen der angeschlossenen Flansche hinaus bis zu deren Anschlagsstellen ununterbrochen gestaltet ist.

Wird also mit einer Anschlagsstelle innerhalb des Flansches operiert, so entsteht dann bis zum Ende des Flansches eine Übergangsstrecke, welche mit mindestens einem Adapterelement überbrückt wird, wobei mit diesem Adapterelement sichergestellt wird, dass eine kontinuierliche planare Fortsetzung des Laufflächenelementes in Rollrichtung auch über die Trennebenen der beiden anliegenden Flansche gewährleistet ist.

Sind die benachbarten Flansche jeweils mit einer Anschlagsstelle versehen sind, müssen die jeweils eingesetzten Adapterelemente so ausgebildet sein, dass sie nicht nur die kontinuierliche planare Fortsetzung des Laufflächenelementes ab Anschlagsstelle bis zur Trennebene der anliegenden Flansche sicherstellen, sondern darüber hinaus muss auch die planare Fortsetzung der Rolloberfläche jenseits dieser Trennebene bis zur Anschlagsstelle des gekoppelten Flansches gewährleistet sein.

Eine Möglichkeit hierzu besteht darin, die Adapterelemente über die Übergangsstrecke hinaus zu erstrecken, und diese Adapterelemente im Bereich der Trennebene zweier benachbarter Flansche mit einer gegenläufigen Anfasung in Rollrichtung zu versehen. Eine solche Anfasung kann auch für die Laufflächenelemente im Bereich der jeweiligen Anschlagsstelle im Flansch vorgesehen werden.

Dabei können die spiegelbildlich zueinander stehenden Adapterelemente im Bereich der Trennebene benachbarter Flansche nicht nur eine zum Verlauf der Laufflächenelemente rechtwinklige Anfasung aufweisen, sondern die Anfasungen können auch bei komplementär abgewinkelten Adapterelementen schrägverlaufend ausgebildet sein. Bei einer solchen Konfiguration reichen dann die Winkelspitzen der abgewinkelten Adapterelemente wechselseitig bis in die Übergangsstrecke des angeschlossenen Flansches hinein.

Das Adapterelement besteht erfindungsgemäß aus mindestens zwei in Wirkverbindung zueinander stehenden Übergangsstücken, welche die Übergangsstrecken anliegender Flasche parallel in Laufrichtung erfassen, wobei die Gesamtbreite dieser Übergangsstücke annähernd der Breite der bei der jeweiligen Anschlagsstelle anstossenden Laufflächenelemente entspricht. Jedes Übergangsstück innerhalb einer Übergangsstrecke weist mindestens eine endseitige Anfasung auf, wobei die Anfasung eines Übergangsstückes gegenüber der Anfasung des benachbarten Übergangsstückes seitenverkehrt und gegenläufig angeordnet ist.

Solche zweiteilige Übergangsstücke, welche jeweils mindestens kraftschlüssig im Flansch verankert sind, lassen sich über die Trennebene bis zu der Anschlagsstelle des benachbarten Flansches verlängern, womit die Übergangsstrecken beider Flansche dann gegenüber den angeschlossenen Laufflächenelementen eine ununterbrochene planare Rolloberfläche aufweisen.

Es ist auch möglich, die kontinuierliche planare Fortsetzung des Laufflächenelementes im Bereich der Führungskanalelemente und Flansche wie folgt vorzusehen:
Die Überlänge des Laufflächenelementes geht zunächst von der Länge des Führungskanalabschnitts aus und umfasst dann die Breite resp. Dicke mindestens eines angeschlossenen Flansches. Es ist hier auch möglich, eine Überlänge vorzusehen, welche gleichzeitig die beiden angeschlossenen Flansche erfasst, wobei in einem solchen Fall die Stirnseiten der Laufflächenelemente im Bereich der Trennebene zweier Kanalsektionen mit mindestens einer Anfasung versehen sind.

Auch hier lässt sich vorsehen, dass die einzelnen aneinander stossenden Laufflächenelemente mit einem gewissen Übermass gegenüber dem streng benötigten Mass auf Grund der Länge des Führungskanalabschnitts resp. der Breite des Flansches oder der Flansche versehen werden, womit auf Grund dieses Übermasses im eingebauten Zustand Stosskräfte auf die Laufflächenelemente entstehen, welche zu einer leichten gleichmässige Auswölbung führen, wodurch dessen Verschleiss oder Lockerung im Betrieb aufgefangen wird. Das heisst, dass die zwischen zwei Laufflächenelementen geführte Führungsrolle immer über eine satte und auch elastische Führung verfügt.

Und/oder die Laufflächenelemente sind einerseits genau auf die Länge der Führungskanalabschnitte und andererseits genau auf die Breite der Flansche dimensioniert. Die einzelnen Elemente, welche im zusammengebauten Zustand Kanalsektionen der Fördereinrichtung bilden, weisen also individuelle abgelängte Laufflächenelemente auf, einerseits bezogen auf die Länge des Führungskanalabschnitts und andererseits bezogen auf die Breite des Flansches. Die kontinuierliche planare Fortsetzung der Rolloberfläche in Bereich der einzelnen Trennebenen wird erstellt, indem dort entsprechende Anfasungen vorgesehen werden.

Auch hier lässt sich vorsehen, dass die einzelnen aneinander stossenden Laufflächenelemente mit einem gewissen Übermass gegenüber dem streng benötigten Mass auf Grund der Länge des Führungskanalabschnitts resp. der Breite des Flansches versehen werden, womit auf Grund dieses Übermasses im eingebauten Zustand Stosskräfte auf die Laufflächenelemente entstehen, welche zu einer leichten gleichmässige Auswölbung führen, wodurch dessen Verschleiss oder Lockerung im Betrieb aufgefangen wird. Das heisst, dass die zwischen zwei Laufflächenelementen geführte Führungsrolle immer über eine satte und auch elastische Führung abrollen kann.

Der Zusammenbau der einzelnen Elemente zu einer operativen Fördereinrichtung setzt voraus, dass die anstossenden Flansche gegenüber den Führungskanalabschnitten in Bezug auf den Verlauf der Laufflächenelemente so zentriert sind, dass an den Stossstellen der Laufflächenelemente resp. an den Trennebenen zwischen Führungskanalabschnitt und Flansch kontinuierliche planare Übergangsverhältnisse hinsichtlich der von den Laufflächenelementen gebildeten Rolloberfläche herrschen.

Eine solche Fördereinrichtung lässt sich vorzugsweise im Zusammenhang mit einem Transportorgan betreiben, das im Wesentlichen aus einer Anzahl von miteinander koppelbaren Funktionseinheiten besteht. Eine Funktionseinheit besteht aus mindestens zwei längs der Förderstrecke im Wesentlichen sequentiell angeordneten Kettengliedern, welche zueinander eine starre und/oder gelenkige Verbindung bilden. Die Funktionseinheit selbst besteht aus einem ersten Kettenglied und einem zweiten Kettenglied, welche sich funktionsweise unterscheiden und in Wirkverbindung zueinander stehen. Die Funktionseinheiten in ihrer Sequenz zur Bildung eines Förderorgans sind kongruent oder quasi-kongruent oder ähnlich oder gemäss ihrer Funktionalität unterschiedlich aufgebaut, wobei die Funktionseinheiten Mittel oder Verbindungselemente für eine lösbare, oder eine durch Kraftschluss bedingte lösbare, und/oder eine nicht lösbare Verbindung aufweisen. Auch im Zusammenhang mit dem Betrieb einer solchen Fördereinrichtung wird auf die bereits genannte Druckschrift, WO2011/060560 A3, verwiesen.

### Kurze Beschreibung der Figuren

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. Alle für das unmittelbare Verständnis der Erfindung nicht wesentlichen Elemente sind weggelassen worden, Gleiche Elemente sind in den verschiedenen Figuren mit den gleichen Bezugszeichen versehen.

In der Zeichnung zeigt:
- Fig. 1: eine aus Führungskanalabschnitten zusammengesetzte Fördereinrichtung;
- Fig. 2: eine Ansicht der Fördereinrichtung gemäss Fig. 1 im zusammengebauten Zustand
- Fig. 3: ein Flansch als Verbindungselement gegenüber dem Führungskanalabschnitt auf der einen Seite und gegenüber dem weiteren Flansch auf der anderen Seite;
- Fig. 4: eine Darstellung des Flansches gemäss Fig. 3 im Aufriss;
- Fig. 5: einen Schnitt durch den Führungskanalabschnitt
- Fig. 6: den Zusammenbau des Führungskanalabschnitts mit dem Flansch unter Einbezug der Adapterelemente;
- Fig. 7: den Zusammenbau von zwei Führungskanalabschnitten mit den entsprechenden Flanschen;
- Fig. 8: eine dreidimensionale Darstellung eines Übergangsstückes, wie es aus Fig. 6 und 7 hervorgeht.

### Wege zur Ausführung der Erfindung

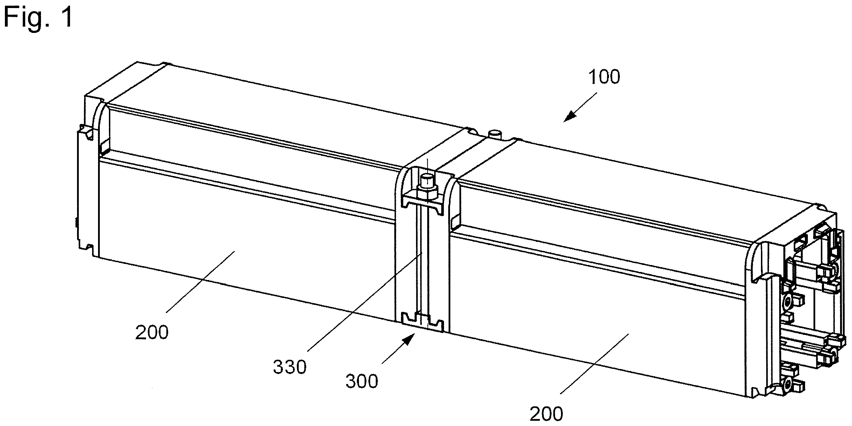

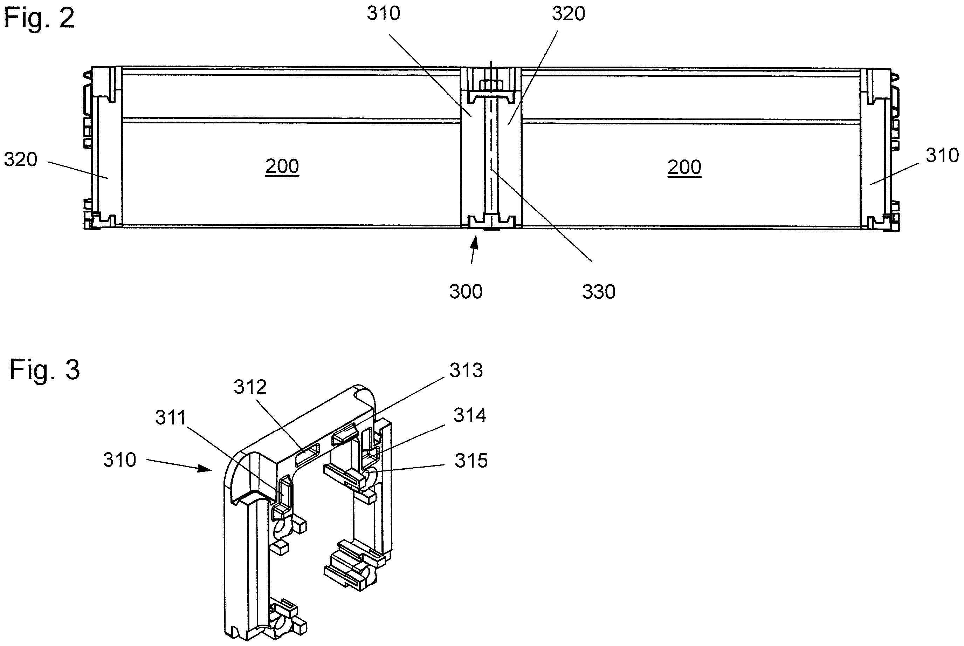

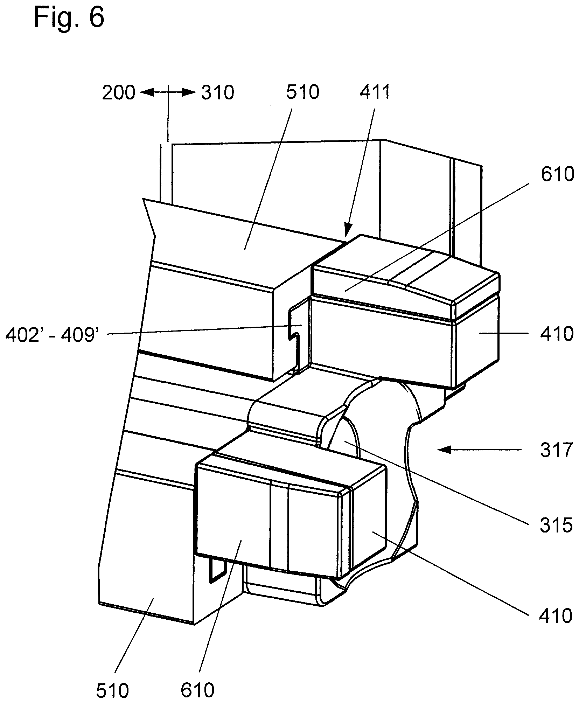

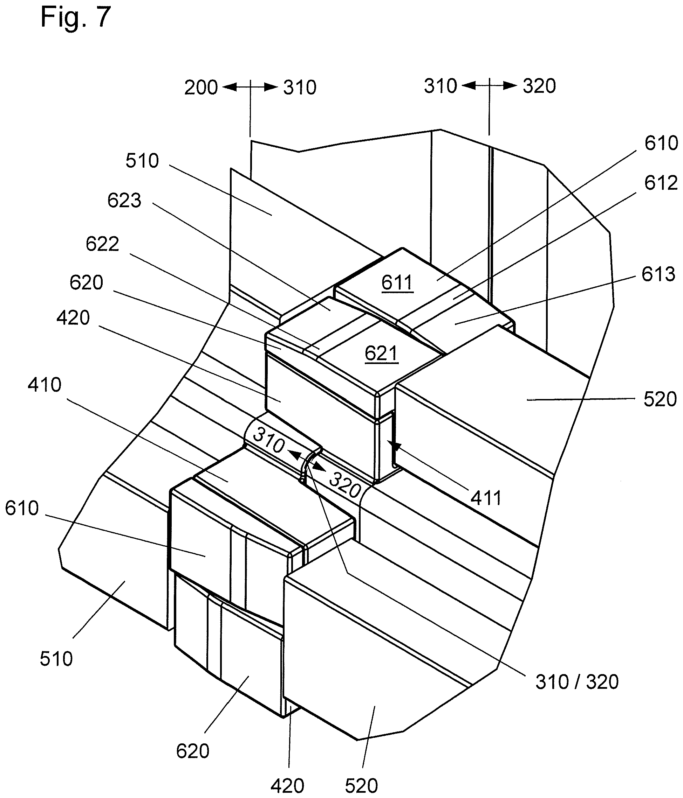

Die in Fig. 1 dargestellte Fördereinrichtung 100 umfasst im Wesentlichen geradlinige längs der Förderstrecke verlaufende Führungskanalabschnitte 200 sowie insgesamt mit Pos. 300 bezeichnete Verbindungselemente, welche die Koppelung dieser Abschnitte übernehmen. Die hier gezeigte Geradlinigkeit ist indessen nicht absolut über die ganze Fördereinrichtung zu verstehen. Es können sich ohne weiteres einer geraden Strecke kurvige Passagen anschliessen, welche sich in der Ebene oder im Raum erstrecken. Grundsätzlich können auch tordierte Förderabschnitte vorliegen. Die Führungskanalabschnitte 200 bilden einzelne tunnelförmige Abschnitte, deren Stirnseiten mit Verbindungselementen 300 versehen sind, die ihrerseits miteinander gekoppelt sind, wobei diese Verbindungselemente als Flansche 310, 320 (Siehe Fig. 2, 3) ausgebildet sind. Vorzugsweise wird hier eine lösbare kraftschlüssige Verbindung 330 vorgesehen, welche gegenüber der Rolloberfläche des Laufflächenelementes (Siehe Fig. 6 und 7) die bestmögliche Flexibilität bietet.

Fig. 2 ist eine Längsansicht zweier zusammengefügter Führungskanalabschnitte 200 unter Einbezug der beiden Flansche 310, 320, welche je stirnseitig angeschlagen werden. Die kraftschlüssige Verbindung zwischen den beiden benachbarten Flanschen 310, 320 wird dann durch eine stirnseitige Verschraubung 330 vorgenommen, auf welche weiter unten noch näher eingegangen wird.

Die an den einander zugewandten Stirnseiten der Führungskanalabschnitten 200 angebrachten Flansche 310, 320 weisen gegengleiche erhöhte resp. vertiefte Elemente auf, welche formschlüssig ineinander greifen. Ein solches Verbindungselement wird in Figur 3 näher gezeigt. Die Verbindung zwischen den beiden Flanschen geschieht über eine laterale Verschraubung, wobei zum besseren Verständnis auf die Figuren 6, 7 der US2013/0001051 A1 verwiesen wird.

Fig. 3 zeigt das Verbindungselement in Form eines Flansches 310 in einer dreidimensionalen Ansicht. Aus dieser Figur 3 ist erkennbar, dass ein an einer Kontaktfläche gebildeter Vorsprung 311 in einer an der gegenüberliegenden Kontaktfläche des angeschlossenen Flansches vorgesehenen Vertiefung 314 eingreift. Der Vorsprung 311 weist eine dreidimensionale vertikale Führung auf, welche mit einer horizontalen vorstehenden Nase erweitert ist. Des Weiteren weist die Jochfläche des Flansches 310 zwei weitere Zentriermittel 312 und 313 auf, welche sich ebenfalls wie beschrieben so verhalten, dass sie auch eine Führungs- und Zentrierungsfunktion ausüben.

Sowohl die Vorsprünge 311, 313 als auch die Vertiefungen 312, 314 sind dreidimensional gegengleich ausgebildet, sie weisen allseitig sich verjüngende Konturen auf, wodurch die Montage vereinfacht und damit auch gleichzeitig eine optimale Zentrierungswirkung erreicht wird. Wie oben bereits erwähnt, wird der jeweilige Flansch 310 oder 320 mit dem jeweiligen Führungskanalabschnitt 200 durch Verschraubung 315 verbunden, und dies vorzugsweise mittels Senkkopfschrauben, welche die dortige Anschlagsoberfläche für die axiale Positionierung nicht tangieren.

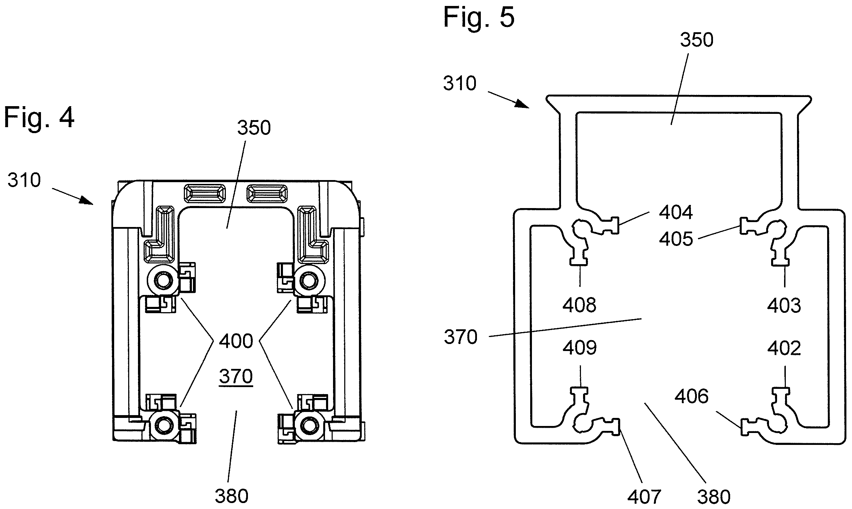

Die Figur 4 zeigt die frontseitige Partie des Flansches 310 gemäss Figur 3. Die inneren zu einem tunnelartigen Kanal ausgebildeten Öffnungen 350, 370, 380, entsprechen im Wesentlichen der kanalmässigen Ausbildung des Führungskanalabschnitts 200, weshalb die nachfolgende Beschreibung des Flansches weitgehend auch auf den Führungskanalabschnitt 200 bezogen werden kann.

Sonach weist die erfindungsgemässe Fördereinrichtung 100 hinsichtlich der Führungskanalabschnitte 200 einen zentralen Führungskanal 370, einen oberseitigen Antriebskanal 350 und einen unterseitigen schlitzförmigen Durchbruch 380 auf. Durch den letzteren entsteht Raum, die Transportelemente für die Druckprodukte nach aussen zu führen.

Gemäss Fig. 4 sind innerhalb des Flansches 310, 320, im Bereich des zentralen Führungskanals 370, Führungsschienenelemente angebracht, welche zusammenfassend mit Pos. 400 angedeutet sind, welche sich entlang der einzelnen Führungskanalabschnitte 200 und der applizierten Flansche erstrecken, und welche der Aufnahme von Laufschienenelementen und Adapterelementen dienen, welche dann einen kontinuierlichen planaren Übergang zwischen den Laufflächen des Flansches 310 und dem anschliessenden Führungskanalabschnitt 200 sicherstellen (Vgl. hierzu Fig. 5). Dies wird dadurch bewerkstelligt, dass die Adapterelemente gegenläufig angefaste bzw. in Förderrichtung abgeschrägte Rolloberflächeabschnitte aufweisen, wie dies aus Fig. 6 und 7 hervorgeht.

Fig. 5 zeigt ein Profil eines Führungskanalabschnitts 200 einer Fördereinrichtung 100. Es sei hier hervorgehoben, dass es sich hier nur ein Beispiel eines solchen Profils handelt, und dass fallweise Veränderungen sowohl betreffend die äussere Geometrie als auch hinsichtlich der Ausgestaltung der inwendigen Durchführungen vorgesehen werden können, wobei solche Veränderungen die Grundgestaltung der Fördereinrichtung 100 aber nicht tangieren.

Wie in Fig.5 zu erkennen ist, weist der Führungskanal 370 einen im Wesentlichen quadratischen Querschnitt auf, wobei an den Ecken dieses Führungskanals 370 vier paarweise angelegte Trägerbereiche 400 vorhanden sind, welche durch die Führungsschienenelemente 402 bis 409 gebildet sind, und welche der Aufnahme der Laufflächenelemente dienen. Hierzu wird auf die Fig. 14, 15 der Druckschrift WO2011/060560 verwiesen.

Die Trägerbereiche 400 resp. die Führungsschienenelemente 402 bis 409 weisen im Wesentlichen die Form von sich längs der Förderstrecke erstreckenden T-Profilen auf, so dass sich die schienenförmige Form der Laufflächenelemente (Siehe Fig. 6 und 7) leicht aufschieben lässt, wobei hier Toleranzwerte vorgesehen werden, welche vorzugsweise eine gemässigte Kraftschlussverbindung bewirken, so dass deren notwendige Aufschiebekraft ohne Weiteres von Hand erbracht werden kann.

Fig, 6 zeigt den Zusammenbau eines Führungskanalabschnitts 200 mit einem Flansch 310. Ersichtlich ist hier die Trennebene 200/310 beider Elemente, wobei die Verschraubung der beiden Elemente über die gezeigte Bohrung 315 geschieht. Der Flansch 310 weist gegenüber den einzelnen Führungsschienenelementen 402'-409', welche die geometrische Fortsetzung der Führungsschienenelemente 402-409 entlang des Führungskanalabschnitts 200 bilden, je einen Support 410 auf, der so beschaffen ist, dass sich in Montagerichtung 317 des Flansches 310 ein als Übergangsstück 610 gebildetes Adapterelement aufschieben lässt. Das in Fig.6 ersichtliche Laufflächenelement 510 bildet die Fortsetzung des sich innerhalb des Führungskanalabschnitts 200 montierten Laufflächenelementes.

Die Länge des über das Ende des Führungskanalabschnitts 200 hinausragenden Laufflächenelementes 510 entspricht mindestens der Strecke, welche sich bis zu der jeweiligen Anschlagsstelle 411 innerhalb des dem Führungskanalabschnitt angeschlossenen Flansches 310 erstreckt. Damit wird erreicht, dass die über die Trennebene 200/310 zwischen Führungskanalabschnitt 200 und Flansch 310 gebildete Übergangsstrecke des Laufflächenelementes 510 nicht die ganze Breite des Flansches 310 entlang der Rolloberfläche erfasst. Mit dieser durch den Support 410 bestimmten Anschlagsstelle 411 lässt sich erreichen, dass sich das eingebaute Laufflächenelement 510 längenmässig genau bestimmt lässt, und dass damit, weil es durchgehend über die heikle Trennebene 200/310 geführt wird, ein perfekter planarer Übergang der Rolloberfläche erzielt wird. Selbstverständlich ist es auch möglich, auf beiden Seiten des Führungskanalabschnitts 200 mit jeweils einer Überlänge des Laufflächenelementes zu operieren, wodurch die beiden angeschlossenen Flansche gegenüber dem Führungskanalabschnitt im Bereich aller Trennebenen einen perfekten planaren Übergang der Rolloberfläche bilden.

Diese Überlänge des Laufflächenelementes kann zusätzlich mit einem Längenübermass versehen werden, womit im eingebauten Zustand, also wenn die Flansche mit dem Führungskanalabschnitt 200 zu einer Kanalsektion kraftschlüssig gekoppelt sind, einen Druck auf das Laufflächenelement in Laufrichtung 317 entsteht, der in axialer Richtung zu einer leichten gleichmässigen Auswölbung des Laufflächenelementes 510 entlang der ganzen Kanalsektion führt, wodurch dessen Verschleiss oder Lockerung im Betrieb aufgefangen werden kann. Das heisst, dass die zwischen zwei Laufflächenelemente geführte Führungsrolle immer über eine satte und auch elastische Führung abrollen kann.

Wird nun mit einer Anschlagsstelle 411 innerhalb des Flansches 310 operiert, so entsteht bis zum Ende des Flansches eine Übergangsstrecke, welche in Fig. 6 durch den bereits erwähnten Support 410 gebildet ist. Diese Übergangsstrecke wird grundsätzlich mit einem Adapterelement überbrückt, das sicherstellen muss, dass eine kontinuierliche planare Fortsetzung des Laufflächenelementes im weiteren Verlauf des Flansches gewährleistet ist. Wenn also benachbarte Flansche jeweils mit einer Anschlagsstelle versehen sind, so müssen die jeweiligen Adapterelemente so ausgebildet sein, dass sie nicht nur die kontinuierliche planare Fortsetzung des Laufflächenelementes ab Anschlagsstelle bis zur jeweiligen Trennstelle der anliegenden Flansche sicherstellen, sondern gerade im Bereich der Trennstelle beider Flansche jene maximierte ununterbrochene planare Fortsetzung der Rolloberfläche sicher stellen können.

Wie aus Fig. 7 nun hervorgeht, besteht das Adapterelement aus zwei in Wirkverbindung zueinander stehenden Übergangsstücken 610, 620, welche die Übergangsstrecken beider Flansche 310, 320 erfassen, dergestalt, dass sich die hinsichtlich der Adapterelemente tragenden nebenangeordneten Supporte 410, 420 über die Trennebene beider Flansche 310, 320 erstrecken, womit die Übergangsstrecken beider Flansche einheitlich durch die zwei als Übergangsstücke ausgebildeten Adapterelemente 610, 620 überwunden werden, wobei die Elemente 410 (Support), 510 (Laufflächenelement), 610 (Adapterelement) zum Flansch 310 gehören, während die Elemente 420 (Support), 520 (Laufflächenelement), 620 (Adapterelement) zum Flansch 320 gehören.

Die nebengeordneten Adapterelemente 610, 620 weisen in Laufrichtung eine gegenläufigen seitenverkehrte Anfasung auf. Bezogen auf das Adapterelement 620 weist dieses an der Anschlagstelle 411 des Laufflächenelementes 520 mit dem Support 420 eine planare Rolloberfläche 621 gegenüber der Rolloberfläche dieses Laufflächenelements auf. Es folgt dann eine abgerundete kurze Zone 622, welche dann in eine moderat gehaltene Schräge 623 übergeht, welche etwaige Höhenunterschiede gegenüber der planaren Rolloberfläche des sich dort anschliessenden Laufflächenelementes 510 des Flansches 310 aufzufangen vermag.

Eine solche Anfasung weist auch das Adapterelement 610 auf, allerdings ist diese in gegenläufiger Richtung ausgebildet. Damit lässt sich erreichen, dass die Rolloberflächen der komplementären Laufflächenelemente 510, 520 mindestens zur Hälfte ihrer Breite maximiert planar in die Rolloberfläche 611, 621 des jeweiligen Adapterelementes 610, 620 übergehen. Eine solche Anfasung hat auch den Vorteil, dass eine leicht bombierte Rolle des Transportorgans (siehe US2013/0001051 A1, Fig. 14, 15) mittig im Bereich der längsverlaufenden Trennlinie beider Adapterelemente 610, 620 abrollen kann, wodurch auch in diesem Bereich mit einem sanften Rollverhalten des Transportorgans über die Trennebenen und Stossstellen der einzelnen zusammengefügten Elemente gerechnet werden kann.

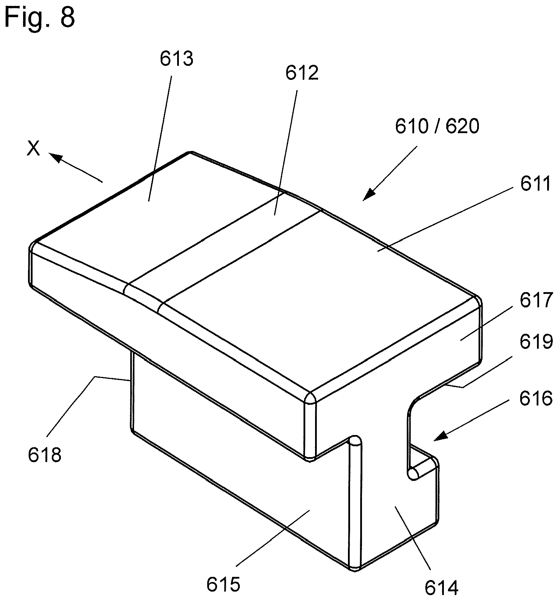

Aus Fig. 8 geht die geometrische Ausgestaltung eines Übergangsstückes 610 resp. 620 hervor, welches in operativer Wirkverbindung mit den Supporten 410 und 420 gemäss den Figuren 6 und 7 steht. Die geometrische Kontur des Übergangsstückes 610 resp. 620 ist so gestaltet, dass es in eine gegengleiche Innenkontur des Supports eingeschoben resp. aufgeschoben werden kann, wobei die Toleranzen beider Konturen zueinander so ausgelegt sind, dass daraus eine positionsstabile Kraftschlussverbindung resultiert. Darüber hinaus wird die positionsstabile Lage des Übergangsstückes 610 resp. 620 im eingebauten Zustand dadurch unterstützt, dass es durch die Enden der Laufflächenelemente 510 resp. 520 eine axiale Einklemmung erfährt (Siehe Fig. 7). Bei der Beschreibung der Kontur gemäss Fig. 8 wird positionsmässig auf das Übergangsstück 610 abgestellt. Das Gleiche gilt aber auch für das gegengleiche Übergangsstück 620.

Das Übergangsstück beschreibt eine im Wesentlichen T-Profilform 614, welche in axialer Richtung X auf der einen Seite 615 einen glatten im Wesentlichen rechtwinklig gegenüber der oberen Platte der T-Profilform verlaufenden Steg aufweist, während auf der gegenüberliegenden Seite der Steg in der Vertikale einen intermediäre nach innen gerichteten treppenförmigen Absatz 616 aufweist, welcher sich in axialer Richtung X entlang des ganzen Übergangsstückes erstreckt. Die durch den Absatz 616 gebildete Oberfläche kann sich in X-Richtung parallel zur unterseitigen Oberfläche 619 der Plattendicke 617 erstrecken, oder sie kann gegenüber dieser Oberfläche 619 jede beliebige positive oder negative Neigung einnehmen, wobei die Gegenkonturform im Support dann eine entsprechende Profilierung aufweisen muss. Die Führung des Übergangsstückes in der Gegenkontur des Supports wird dreidimensional betrachtet mindestens durch die Stegbreite 614, unter Einbindung des Absatzes 616, gewährleistet, und andererseits durch die Plattendicke 617 des T-Profils, welche durch den Absatz 616 spielfrei mit der Supportoberfläche in Wirkverbindung steht.

Die Vorderkante 618 bildet die Anschlagkante gegenüber einer vorgesehenen Anschlagstelle innerhalb des Supports, damit die beiden Enden des Übergangsstückes in X-Richtung gegenüber den sich anschliessenden Enden der Laufflächenelemente eine eindeutige Positionierung aufweisen. Der Verlauf der Oberfläche 611, 612, 613 des Übergangsstückes ist bereits in Fig. 7 beschrieben worden.

Die hier gezeigte Kontur des Übergangsstückes gemäss Fig. 8 ist als Vorzugsvariante zu verstehen, wobei andere vorteilhafte Profilierungen ohne weiteres auch möglich sind.

Es ist auch möglich bei einstückigen Adapterelementen ohne weiteres auch eine solche Kontur resp. Profilierung gemäss Fig. 8 vorzusehen.

## Patentansprüche

1. Fördereinrichtung (100) für den Einsatz eines Transportorgans zum Fördern von Druckprodukten entlang einer Förderstrecke, wobei die Fördereinrichtung aus über Flansche (310, 320) miteinander verbundenen Führungskanalabschnitten (200) besteht, welche in Förderrichtung tunnelförmig ausgebildet sind und gegenüber dem auf Rollen fahrbaren Transportorgan eine unterseitige durchgehende Öffnung für Mittel aufweisen, welche eine mittelbare und/oder unmittelbare Förderung der Druckprodukte entlang der Fördereinrichtung übernehmen, wobei im Innenraum der Führungskanalabschnitte und der Flansche Führungsschienenelemente (402-409; 402'-409') angeordnet sind, welche Laufflächenelemente (510, 520) für das Transportorgan tragen, wobei die Laufflächenelemente entlang der Führungskanalabschnitte und der dazugehörigen Flansche mit mindestens einem Mittel ergänzt und/oder mit mindestens einer Massnahme versehen sind, welche einen kontinuierlichen planaren Übergang der dem Transportorgan dienenden Rolloberfläche der Laufflächenelemente bewerkstelligen, wobei die Massnahme darin besteht, mindestens ein Laufflächenelement mit einer Überlänge gegenüber der Länge des betreffenden Führungskanalabschnitts zu versehen, und wobei als Mittel mindestens ein Adapterelement (610, 620) als Übergangsstück mindestens im Bereich einer Trennebene (200/310; 310/320) zwischen benachbarter Flansche vorgesehen ist, **dadurch gekennzeichnet, dass** das Adapterelement aus mindestens zwei in Wirkverbindung zueinander stehenden Übergangsstücken (611, 621) besteht, welche die Übergangsstrecken anliegender Flansche parallel in Laufrichtung erfassen, dass die Gesamtbreite dieser Übergangsstücke annähernd der Breite der bei der jeweiligen Anschlagsstelle (411) anstossenden Laufflächenelemente entspricht, dass jedes Übergangsstück innerhalb der Übergangsstrecke eine seitenverkehrte und gegenläufig angeordnete endseitige Anfasung gegenüber dem benachbarten Übergangsstück aufweist.

2. Fördereinrichtung nach Anspruch 1, **dadurch gekennzeichnet, dass** die Führungsschienenelemente mindestens wandseitig des Führungskanalabschnitts angeordnet sind.

3. Fördereinrichtung nach Anspruch 2, **dadurch gekennzeichnet, dass** die Laufflächenelemente mindestens kraftschlüssig mit den Führungsschienenelementen gekoppelt sind.

4. Fördereinrichtung nach Anspruch 1, **dadurch gekennzeichnet, dass** sich die Überlänge des zu einem Führungskanalabschnitt gehörigen Laufflächenelementes über mindestens ein Ende des Führungskanalabschnitts erstreckt, dergestalt, dass das über den Führungskanalabschnitt hinausragende Teil des Laufflächenelementes mindestens teilweise die kontinuierliche ununterbrochene Fortsetzung von dessen Rolloberfläche innerhalb des angeschlossenen Flansches bildet.

5. Fördereinrichtung nach Anspruch 1, **dadurch gekennzeichnet, dass** sich die Überlänge des zu einem Führungskanalabschnitt gehörigen Laufflächenelementes über die beiden Enden des Führungskanalabschnitts erstreckt, dergestalt, dass die Überlängen auf beiden Seiten des Führungskanalabschnitts mindestens teilweise die kontinuierliche ununterbrochene Fortsetzung der Rolloberfläche des Laufflächenelementes innerhalb der angeschlossenen Flansche bilden.

6. Fördereinrichtung nach einem oder mehreren der Ansprüche 1-5, **dadurch gekennzeichnet, dass** sich die Überlänge des zu einem Führungskanalabschnitt gehörigen Laufflächenelementes mindestens bis zu einer Anschlagsstelle innerhalb des dem Führungskanalabschnitt angeschlossenen Flansches erstreckt, und dass von der Anschlagsstelle bis Ende des Flansches eine Übergangsstrecke gebildet ist.

7. Fördereinrichtung nach einem der Ansprüche 1-6, **dadurch gekennzeichnet, dass** die Überlänge mit einem zusätzlichen Übermass gegenüber dem Streckenabschnitt bis zu der Anschlagsstelle im angeschlossenen Flansch versehen ist.

8. Fördereinrichtung nach einem oder mehreren der Ansprüche 1-7, **dadurch gekennzeichnet, dass** die Übergangstrecke durch die Übergangsstücke bestückt ist, welche ab Anschlagsstelle die weitere kontinuierliche planare Fortsetzung der von dem Laufflächenelement gebildeten Rolloberfläche bilden.

9. Fördereinrichtung nach einem oder mehreren der Ansprüche 1-8, **dadurch gekennzeichnet, dass** die Übergangsstücke die planare kontinuierliche Fortsetzung der von dem Laufflächenelement gebildeten Rolloberfläche von der einen zur anderen Anschlagsstelle benachbarter Flansche bilden.

10. Fördereinrichtung nach Anspruch 9, **dadurch gekennzeichnet, dass** die benachbarten Übergangsstücke an der Trennebene der benachbarten Flansche aufeinander stossen oder wechselseitig ineinander übergehen.

11. Fördereinrichtung nach einem der Ansprüche 1-10, **dadurch gekennzeichnet, dass** die Übergangsstücke an ihren Stossstellen mit einer spiegelbildlich zueinander versehenen Anfasung ausgebildet sind, welche gegenüber der Trennebene gerade oder schrägverlaufend ausgebildet ist.

12. Fördereinrichtung nach Anspruch 1, **dadurch gekennzeichnet, dass** jedes Übergangsstück mit einem Flansch in Wirkverbindung steht.

13. Fördereinrichtung nach den Ansprüchen 1 und/oder 12, **dadurch gekennzeichnet, dass** sich jedes Übergangsstück über die Trennebene (200/310; 310/320) des angeschlossenen Flansches erstreckt.

14. Fördereinrichtung nach einem der Ansprüche 1, 12-13, **dadurch gekennzeichnet, dass** die zwei nebengeordneten Übergangsstücke eine Laufflächenbreite aufweisen, welche annähernd der Laufflächenbreite des Laufflächenelementes entspricht.

15. Fördereinrichtung nach einem oder mehreren der Ansprüche 1, 12-14, **dadurch gekennzeichnet, dass** die nebengeordneten Übergangsstücke je eine endseitige Anfasung (613) aufweisen, welche in Laufrichtung des Transportorgans seitenverkehrt und gegenläufig angeordnet sind.

16. Fördereinrichtung nach einem oder mehreren der Ansprüche 1, 12-15, **dadurch gekennzeichnet, dass** die Anfasung mindestens einen Teil der Länge des Übergangsstückes erfasst.

17. Fördereinrichtung nach einem oder mehreren der Ansprüche 1-16, **dadurch gekennzeichnet, dass** mindestens ein Übergangsstück eine im Wesentlichen T-Profilform (614) aufweist, dass mindestens ein gegenüber der oberen Platte dieser T-Profilform im Wesentlichen rechtwinklig verlaufender Steg (615) mindestens einen nach innen gerichteten Absatz (616) aufweist.

18. Fördereinrichtung nach Anspruch 1, **dadurch gekennzeichnet, dass** die Massnahme darin besteht, die Überlänge des Laufflächenelementes (510, 520) gegenüber dem Führungskanalabschnitt (200) so zu bestimmen, dass sie der Breite mindestens eines angeschlossenen Flansches (310, 320) entspricht oder annähernd entspricht, und wobei die Stirnseite der Laufflächenelemente im Bereich der Trennebene der Flansche mit mindestens einer Anfasung versehen ist.

19. Fördereinrichtung nach Anspruch 18, **dadurch gekennzeichnet, dass** die Gesamt-Überlänge des Laufflächenelementes ein zusätzliches Übermass aufweist.

20. Fördereinrichtung nach Anspruch 1, **dadurch gekennzeichnet, dass** die Mass-nahme darin besteht, die Länge des Laufflächenelementes individuell bezogen auf die jeweilige Länge des Führungskanalabschnitts und auf die Breite des Flansches vorzusehen, und wobei die Stirnseite der Laufflächenelemente im Bereich der Trennebenen der einzelnen zusammengekoppelten Führungskanalabschnitte und Flansche mit mindestens einer Anfasung versehen ist.

21. Fördereinrichtung nach Anspruch 20, **dadurch gekennzeichnet, dass** die Länge der einzelnen Laufflächenelemente mit einem Übermass versehen ist.

22. Fördereinrichtung nach einem oder mehreren der Ansprüchen 1-21, **dadurch gekennzeichnet, dass** die anstossenden Flansche an den Trennebenen so zueinander zentriert sind, dass an den Stossstellen der Laufflächenelemente oder der Adapterelemente zueinander oder der Adapterelemente gegenüber den anschliessenden Laufflächenelementen ein kontinuierlicher planarer Übergang der Rolloberfläche gewährleistet ist.

23. Fördereinrichtung nach einem oder mehreren der Ansprüche 1-22, **dadurch gekennzeichnet, dass** wandseitig des Führungskanalabschnitts zwei gegenüberliegend beabstandete als Führungsschienenelemente (402-409; 402'-409') gebildete Trägerbereiche (400, 402-409) für ein erstes und ein zweites Laufflächenelement angeordnet sind, dass an der gegenüberliegenden Wand zwei ebenfalls gegenüberliegend angeordnete und beabstandete Trägerbereiche für ein drittes und ein viertes Laufflächenelement vorhanden sind, dass jeweils benachbart zu jedem wandseitigen Trägerbereich weitere Trägerbereiche für ein fünftes und gegenüberliegend ein sechstes, und ein siebentes und ein achtes Laufflächenelement angeordnet sind, deren Lauffläche jeweils zu einem benachbarten Laufflächenelement rechtwinklig angeordnet ist, und dass das erste mit dem zweiten Laufflächenelement, das dritte mit dem vierten Laufflächenelement, das fünfte mit der sechsten Laufflächenelement und das siebente mit dem achten Laufflächenelement paarweise, gegenüberliegend und beabstandet angeordnet sind.

24. Fördereinrichtung nach Anspruch 1, durch gekennzeichnet, dass das Transportorgan im Wesentlichen aus einer Anzahl von miteinander koppelbaren Funktionseinheiten besteht, dass eine Funktionseinheit aus mindestens zwei längs der Förderstrecke im Wesentlichen sequentiell angeordneten Kettengliedern besteht, dass die Kettenglieder zueinander eine starre und/oder gelenkige Verbindung bilden, dass die Funktionseinheit aus einem ersten Kettenglied und einem zweiten Kettenglied besteht, welche sich funktionsweise unterscheiden und in Wirkverbindung zueinander stehen, dass die Funktionseinheiten in ihrer Sequenz zur Bildung eines Förderorgans kongruent oder quasi-kongruent oder ähnlich oder gemäss ihrer Funktionalität unterschiedlich aufgebaut sind, und dass die Funktionseinheiten zueinander Mittel oder Verbindungselemente für eine lösbare, oder eine durch Kraftschluss bedingte lösbare, und/oder eine nicht lösbare Verbindung aufweisen.

## Claims

1. Conveying apparatus (100) for use of a transporting mechanism for conveying printed products along a conveying route, wherein the conveying apparatus consists of guide-channel portions (200), which are connected to one another via flanges (310, 320), are of tunnel-form design in a conveying direction and, opposite the transporting mechanism, which is movable on rollers, have a continuous opening on their underside for means which perform the task of conveying the printed products directly and/or indirectly along the conveying apparatus, wherein the interior of the guide-channel portions and of the flanges contains guide-rail elements (402-409; 402'-409'), which carry running-surface elements (510, 520) for the transporting mechanism, wherein, along the guide-channel portions and the associated flanges, the running-surface elements are supplemented by at least one means, and/or are provided with at least one measure, which create a continuous, planar transition for the rolling surface of the running-surface elements, said rolling surface being provided for the transporting mechanism, wherein the measure consists in providing at least one running-surface element with an excess length in relation to the length of the relevant guide-channel portion, and wherein the means provided is at least one adapter element (610, 620) in the form of a transition piece at least in the region of a separating plane (200/310; 310/320) between adjacent flanges, **characterized in that** the adapter element consists of at least two operatively connected transition pieces (611, 621), which cover the transition extents of abutting flanges in a parallel state in the running direction, **in that** the overall width of said transition pieces corresponds approximately to the width of the running-surface elements, which adjoin at the respective stop location (411), and **in that** each transition piece, within the transition extent, has a mirror-inverted and oppositely arranged end chamfer in relation to the adjacent transition piece.

2. Conveying apparatus according to Claim 1, **characterized in that** the guide-rail elements are arranged at least on the wall(s) of the guide-channel portion.

3. Conveying apparatus according to Claim 2, **characterized in that** the running-surface elements are coupled to the guide-rail elements at least in a force-fitting manner.

4. Conveying apparatus according to Claim 1, **characterized in that** the excess length of the running-surface element, which belongs to a guide-channel portion, extends beyond at least one end of the guide-channel portion such that that part of the running-surface element which projects beyond the guide-channel portion forms, at least to some extent, the continuous, uninterrupted extension of its rolling surface within the connected flange.

5. Conveying apparatus according to Claim 1, **characterized in that** the excess length of the running-surface element, which belongs to a guide-channel portion, extends beyond the two ends of the guide-channel portion such that the excess lengths on either side of the guide-channel portion form, at least to some extent, the continuous, uninterrupted extension of the rolling surface of the running-surface element within the connected flanges.

6. Conveying apparatus according to one or more of Claims 1-5, **characterized in that** the excess length of the running-surface element, which belongs to a guide-channel portion, extends at least up to a stop location within the flange connected to the guide-channel portion, and **in that** a transition extent is formed from the stop location to the end of the flange.

7. Conveying apparatus according to one of Claims 1-6, **characterized in that** the excess length is provided with an additional over-dimensioning in relation to the extent up to the stop location in the connected flange.

8. Conveying apparatus according to one or more of Claims 1-7, **characterized in that** the transition extent is provided with the transition pieces, which, from the stop location, form the rest of the continuous, planar extension of the rolling surface, which is formed by the running-surface element.

9. Conveying apparatus according to one or more of Claims 1-8, **characterized in that** the transition pieces form the planar, continuous extension of the rolling surface from the one stop location to the other of adjacent flanges, said rolling surface being formed by the running-surface element.

10. Conveying apparatus according to Claim 9, **characterized in that** the adjacent transition pieces butt against one another, or merge one into the other mutually, at the separating plane of the adjacent flanges.

11. Conveying apparatus according to one of Claims 1-10, **characterized in that**, at their abutment locations, the transition pieces have a chamfer, the chamfers being mirror-inverted in relation to one another and being designed to be rectilinear or to run obliquely in relation to the separating plane.

12. Conveying apparatus according to Claim 1, **characterized in that** each transition piece is in operative connection with a flange.

13. Conveying apparatus according to Claim 1 and/or Claim 12, **characterized in that** each transition piece extends beyond the separating plane (200/310; 310/320) of the connected flange.

14. Conveying apparatus according to one of Claims 1, 12-13, **characterized in that** the two adjacent transition pieces have a running-surface width which corresponds approximately to the running-surface width of the running-surface element.

15. Conveying apparatus according to one or more of Claims 1, 12-14, **characterized in that** the adjacent transition pieces each have an end chamfer (613), these being arranged in mirror-inverted fashion, and in opposite directions, as seen in the running direction of the transporting mechanism.

16. Conveying apparatus according to one or more of Claims 1, 12-15, **characterized in that** the chamfer covers at least part of the length of the transition piece.

17. Conveying apparatus according to one or more of Claims 1-16, **characterized in that** at least one transition piece has an essentially T-profile shape (614), and **in that** at least one crosspiece (615), which runs essentially at right angles in relation to the upper plate of said T-profile shape, has at least one inwardly directed shoulder (616).

18. Conveying apparatus according to Claim 1, **characterized in that** the measure consists in determining the excess length of the running-surface element (510, 520) in relation to the guide-channel portion (200) such that it corresponds, or approximately corresponds, to the width of at least one connected flange (310, 320), wherein the end side of the running-surface elements is provided with at least one chamfer in the region of the separating plane of the flanges.

19. Conveying apparatus according to Claim 18, **characterized in that** the overall excess length of the running-surface element includes an additional over-dimensioning.

20. Conveying apparatus according to Claim 1, **characterized in that** the measure consists in providing the length of the running-surface element individually in relation to the respective length of the guide-channel portion and to the width of the flange, wherein the end side of the running-surface elements is provided with at least one chamfer in the region of the separating planes of the individual coupled-together guide-channel portions and flanges.

21. Conveying apparatus according to Claim 20, **characterized in that** the length of the individual running-surface elements is provided with an over-dimensioning.

22. Conveying apparatus according to one or more of Claims 1-21, **characterized in that** the abutting flanges at the separating planes are centred in relation to one another such that a continuous, planar transition of the running surface is ensured at the abutment locations of the running-surface elements or of the adapter elements in relation to one another or of the adapter elements in relation to the adjoining running-surface elements.

23. Conveying apparatus according to one or more of Claims 1-22, **characterized in that** two carrier regions (400, 402-409) for a first and a second running-surface element are arranged spaced apart opposite one another, in the form of guide-rail elements (402-409; 402'-409'), on the wall side of the guide-channel portion, **in that** two carrier regions for a third and a fourth running-surface element are present, likewise spaced apart opposite one another, on the opposite wall, **in that** each wall-sided carrier region has arranged respectively adjacent to it further carrier regions for a fifth and, opposite this, a sixth running-surface element and also a seventh and an eighth running-surface element, the running-surface of said running-surface elements in each case is arranged at right angles to an adjacent running-surface element, and **in that** the first running-surface element is paired with the second, the third running-surface element is paired with the fourth, the fifth running-surface element is paired with the sixth and the seventh running-surface element is paired with the eighth, the elements in each pair being arranged spaced apart opposite one another.

24. Conveying apparatus according to Claim 1, **characterized in that** the transporting mechanism comprises essentially a number of functional units which are coupleable to one another, **in that** a functional unit comprises at least two chain links, arranged essentially sequentially along the conveying route, **in that** the chain links form a rigid and/or articulated connection in relation to one another, **in that** the functional unit consists of a first chain link and a second chain link, which are functionally different and are in operative connection to each other, **in that** the functional units, as seen in their sequence for forming a conveying mechanism, are constructed congruently or quasi-congruently or similar or different according to their functionality, and **in that** the functional units together have means or connecting elements for a connection which is releasable, releasable as a result of a force fit and/or non-releasable.

## Revendications

1. Dispositif de convoyage (100) réalisé pour l'utilisation d'un organe de transport dévolu à l'acheminement de produits d'impression le long d'un trajet de convoyage, ledit dispositif de convoyage étant constitué de tronçons de canaux de guidage (200) reliés les uns aux autres par l'intermédiaire de brides (310, 320), réalisés en forme de tunnel dans la direction de convoyage et dont la face inférieure présente, par rapport audit organe de transport déplaçable sur des rouleaux, un orifice ininterrompu dédié à des moyens prenant en charge un convoyage indirect et/ou direct desdits produits d'impression le long dudit dispositif de convoyage, l'espace interne desdits tronçons de canaux de guidage, et desdites brides, renfermant des éléments (402-409 ; 402'-409') formant rails de guidage et portant des éléments (510, 520) à surfaces de roulement qui sont destinés audit organe de transport, sachant que, le long des tronçons de canaux de guidage et des brides associées, lesdits éléments à surfaces de roulement sont complétés par au moins un moyen, et/ou sont dotés d'au moins une mesure spécifique instaurant une transition plane continue de la piste de roulement desdits éléments à surfaces de roulement, servant audit organe de transport, sachant que ladite mesure spécifique consiste à munir au moins un élément à surface de roulement d'une surlongueur, vis-à-vis de la longueur du tronçon de canal de guidage considéré, et sachant qu'il est prévu, en tant que moyen, au moins un élément adaptateur (610, 620) se présentant comme une pièce de transition au moins dans la région d'un plan de séparation (200/310 ; 310/320) entre des brides voisines, **caractérisé par le fait que** l'élément adaptateur est composé d'au moins deux pièces de transition (611, 621) en liaison opérante l'une avec l'autre et couvrant parallèlement, dans la direction de convoyage, les trajets de transition de brides attenantes ; **par le fait que** la largeur totale de ces pièces de transition correspond approximativement à la largeur des éléments à surfaces de roulement se rencontrant au niveau de la zone respective (411) de venue en butée ; et **par le fait que** chaque pièce de transition est pourvue, à l'intérieur du trajet de transition, d'un chanfrein d'extrémité agencé avec inversion latérale et en sens inverse par rapport à la pièce de transition voisine.

2. Dispositif de convoyage selon la revendication 1, **caractérisé par le fait que** les éléments formant rails de guidage sont implantés au moins côté paroi du tronçon de canal de guidage.

3. Dispositif de convoyage selon la revendication 2, **caractérisé par le fait que** les éléments à surfaces de roulement sont couplés aux éléments formant rails de guidage, au moins par engagement positif.

4. Dispositif de convoyage selon la revendication 1, **caractérisé par le fait que** la surlongueur de l'élément à surface de roulement appartenant à un tronçon de canal de guidage s'étend sur au moins une extrémité dudit tronçon de canal de guidage, de façon telle que la partie dudit élément à surface de roulement, faisant saillie au-delà dudit tronçon de canal de guidage, forme au moins partiellement, à l'intérieur de la bride raccordée, le prolongement continu ininterrompu de la piste de roulement dudit élément.

5. Dispositif de convoyage selon la revendication 1, **caractérisé par le fait que** la surlongueur de l'élément à surface de roulement appartenant à un tronçon de canal de guidage s'étend sur les deux extrémités dudit tronçon de canal de guidage, de façon telle que les surlongueurs forment au moins partiellement sur les deux côtés dudit tronçon de canal de guidage, à l'intérieur des brides raccordées, le prolongement continu ininterrompu de la piste de roulement dudit élément à surface de roulement.

6. Dispositif de convoyage selon l'une ou plusieurs des revendications 1-5, **caractérisé par le fait que** la surlongueur de l'élément à surface de roulement appartenant à un tronçon de canal de guidage s'étend jusqu'à une zone de venue en butée, à l'intérieur de la bride raccordée audit tronçon de canal de guidage ; et **par le fait qu'**un trajet de transition est formé depuis ladite zone de venue en butée jusqu'à l'extrémité de ladite bride.

7. Dispositif de convoyage selon l'une des revendications 1-6, **caractérisé par le fait que** la surlongueur est dotée d'un surdimensionnement additionnel par rapport au segment de trajet jusqu'à la zone de venue en butée, dans la bride raccordée.

8. Dispositif de convoyage selon l'une ou plusieurs des revendications 1-7, **caractérisé par le fait que** le trajet de transition est garni par les pièces de transition qui forment, à partir de la zone de venue en butée, la poursuite du prolongement plan continu de la piste de roulement constituée par l'élément à surface de roulement.

9. Dispositif de convoyage selon l'une ou plusieurs des revendications 1-8, **caractérisé par le fait que** les pièces de transition forment, de l'une à l'autre des zones de venue en butée de brides voisines, le prolongement plan continu de la piste de roulement constituée par l'élément à surface de roulement.

10. Dispositif de convoyage selon la revendication 9, **caractérisé par le fait que** les pièces de transition voisines se rencontrent mutuellement, ou fusionnent alternativement les unes dans les autres au niveau du plan de séparation des brides voisines.

11. Dispositif de convoyage selon l'une des revendications 1-10, **caractérisé par le fait que** les pièces de transition sont pourvues, au niveau de leurs zones de rencontre, d'un chanfrein à spécularité réciproque de réalisation rectiligne, ou à tracé oblique, par rapport au plan de séparation.

12. Dispositif de convoyage selon la revendication 1, **caractérisé par le fait que** chaque pièce de transition est en liaison opérante avec une bride.

13. Dispositif de convoyage selon la (les) revendication(s) 1 et/ou 12, **caractérisé par le fait que** chaque pièce de transition s'étend au-dessus du plan de séparation (200/310 ; 310/320) de la bride raccordée.

14. Dispositif de convoyage selon l'une des revendications 1, 12-13, **caractérisé par le fait que** les deux pièces de transition juxtaposées présentent une largeur de surface de roulement qui correspond, approximativement, à la largeur de surface de roulement de l'élément à surface de roulement.

15. Dispositif de convoyage selon l'une ou plusieurs des revendications 1, 12-14, **caractérisé par le fait que** les pièces de transition juxtaposées sont munies de chanfreins d'extrémité (613) respectifs, agencés avec inversion latérale et en sens inverse dans la direction de roulement de l'organe de transport.

16. Dispositif de convoyage selon l'une ou plusieurs des revendications 1, 12-15, **caractérisé par le fait que** le chanfrein couvre au moins une partie de la longueur de la pièce de transition.

17. Dispositif de convoyage selon l'une ou plusieurs des revendications 1-16, **caractérisé par le fait qu'**au moins une pièce de transition présente une configuration profilée (614) substantiellement en T ; et **par le fait qu'**au moins un jambage (615), s'étendant pour l'essentiel à angle droit par rapport au plateau supérieur de cette configuration profilée en T, est muni d'au moins un décrochement (616) pointant vers l'intérieur.

18. Dispositif de convoyage selon la revendication 1, **caractérisé par le fait que** la mesure spécifique consiste à déterminer la surlongueur de l'élément (510, 520) à surface de roulement, par rapport au tronçon de canal de guidage (200), de façon telle qu'elle corresponde, ou corresponde approximativement à la largeur d'au moins une bride (310, 320) raccordée, la face extrême des éléments à surfaces de roulement étant pourvue d'au moins un chanfrein dans la région du plan de séparation des brides.

19. Dispositif de convoyage selon la revendication 18, **caractérisé par le fait que** la surlongueur totale de l'élément à surface de roulement présente un surdimensionnement additionnel.

20. Dispositif de convoyage selon la revendication 1, **caractérisé par le fait que** la mesure spécifique consiste à prévoir la longueur de l'élément à surface de roulement individuellement par rapport à la longueur respective du tronçon de canal de guidage et de la largeur de la bride, la face extrême des éléments à surfaces de roulement étant pourvue d'au moins un chanfrein dans la région du plan de séparation des tronçons de canaux de guidage et des brides individuels, couplés les uns aux autres.

21. Dispositif de convoyage selon la revendication 20, **caractérisé par le fait que** la longueur des éléments individuels à surfaces de roulement présente un surdimensionnement.

22. Dispositif de convoyage selon l'une ou plusieurs des revendications 1-21, **caractérisé par le fait que** les brides se rencontrant sont centrées les unes par rapport aux autres, au niveau des plans de séparation, de façon telle qu'une transition plane continue de la piste de roulement soit garantie au niveau des zones de rencontre mutuelle des éléments à surfaces de roulement ou des éléments adaptateurs, ou bien desdits éléments adaptateurs par rapport aux éléments à surfaces de roulement situés dans la continuité.

23. Dispositif de convoyage selon l'une ou plusieurs des revendications 1-22, **caractérisé par le fait que** deux régions de support (400, 402-409) dédiées à des premier et deuxième éléments à surfaces de roulement, situées à distance en vis-à-vis l'une de l'autre et configurées en tant qu'éléments (402-409 ; 402'-409') formant rails de guidage, sont implantées côté paroi du tronçon de canal de guidage ; **par le fait que** des régions de support affectées à des troisième et quatrième éléments à surfaces de roulement, pareillement situées en vis-à-vis et distantes l'une de l'autre, sont présentes sur la paroi située en vis-à-vis ; **par le fait que** des régions de support supplémentaires, dévolues à un cinquième élément à surface de roulement et à un sixième élément placé en vis-à-vis, et à des septième et huitième éléments à surfaces de roulement dont la surface de roulement est respectivement agencée à angle droit par rapport à un élément voisin à surface de roulement, occupent respectivement des emplacements voisins de chaque région de support implantée côté paroi ; et **par le fait que** les premier et deuxième, les troisième et quatrième, les cinquième et sixième, et les septième et huitième éléments à surfaces de roulement sont respectivement agencés par paires, en vis-à-vis et à distance les uns des autres.

24. Dispositif de convoyage selon la revendication 1, **caractérisé par le fait que** l'organe de transport est constitué, pour l'essentiel, d'un certain nombre d'unités fonctionnelles pouvant être couplées les unes aux autres ; **par le fait qu'**une unité fonctionnelle est composée d'au moins deux chaînons agencés, pour l'essentiel, séquentiellement le long du trajet de convoyage ; **par le fait que** lesdits chaînons forment une liaison mutuelle rigide et/ou articulée ; **par le fait que** ladite unité fonctionnelle est composée d'un premier chaînon et d'un second chaînon, différant fonctionnellement l'un de l'autre et en liaison opérante l'un avec l'autre ; **par le fait que**, dans leur séquence ciblant la formation d'un organe de convoyage, les unités fonctionnelles présentent un agencement structurel concordant ou quasi concordant, voire similaire ou différant quant à leur fonctionnalité ; et **par le fait que** lesdites unités fonctionnelles sont mutuellement dotées de moyens ou d'éléments de liaison, en vue d'une liaison dissociable ou d'une liaison dissociable conditionnée par engagement positif, et/ou d'une liaison indissociable.
